# EUROPÄISCHE PATENTANMELDUNG

(11) **EP 2 543 605 A1**
(43) Veröffentlichungstag der Anmeldung: **09.01.2013**
(21) Anmeldenummer: 12005021.6
(22) Anmeldetag: 05.07.2012
(51) Int. Cl.: B65B 47/02, B29C 51/42, B29B 13/02

(54) **Verfahren und Vorrichtung zum berührungslosen Heizen einer tiefziehbaren Folie**

(30) Priorität: 06.07.2011 DE 102011106695
(71) Anmelder: MULTIVAC Sepp Haggenmüller GmbH & Co KG, 87787 Wolfertschwenden (DE)
(72) Erfinder: Holzem, Dieter, 88453 Erolzheim (DE)
(74) Vertreter: Grünecker, Kinkeldey, Stockmair & Schwanhäusser

(57) **Zusammenfassung**

Offenbart wird ein Verfahren zum berührungslosen Heizen einer tiefziehbaren Folie (3) vor ihrer Verformung. Das Heizen wird dabei durch wenigstens eine Heizung (9) mit wenigstens einer der Folie (3) zugewandten porösen Oberfläche (13) durchgeführt, wobei die poröse Oberfläche (13) von Luft durchströmt wird. In Folge der Durchströmung der porösen Oberfläche (13) mit Luft wird ein Luftfilm zwischen der porösen Oberfläche (13) und der Folie (3) ausgebildet. Offenbart wird des weiteren auch eine Heizeinrichtung (4) zum berührungslosen Heizen einer tiefziehbaren Folie (3), sowie eine darauf bezogene Verpackungsmaschine (1).

## Beschreibung

Die Erfindung bezieht sich auf ein Verfahren gemäß dem Oberbegriff des Anspruchs 1 sowie auf eine Heizeinrichtung mit den Merkmalen des Anspruchs 8.

Es ist bekannt, dass ein Thermoplast, der als Folie vorliegt, warmverformt werden kann, wenn die Folie soweit erwärmt wird, dass sich der Thermoplast in einem thermo-elastischen Bereich befindet. Das Erwärmen der Folie kann durch verschiedene Verfahren der Wärmeübertragung erreicht werden.

Beispielsweise ist aus der DE 197 43 157 A1 eine Anwendung bekannt, bei der eine Folienbahn zwischen zwei Kontaktplatten auf eine Temperatur im thermo-elastischen Bereich erwärmt wird. Jede der beiden Kontaktplatten ist fest oder lösbar mit einer Heizplatte verbunden, die die erforderliche Heizenergie an der Kontaktplatte erzeugt. Eine antihaftbeschichtete Fläche der Kontaktplatte überträgt die Wärme der Heizplatte durch einen direkten Kontakt auf die Folienbahn. Der direkte Kontakt beider Komponenten wirkt sich auf einige Eigenschaften der weiterzuverarbeitenden Folie nachteilig aus. So bildet sich beispielsweise ein Abdruck der Kontaktplatte auf der Folie ab.

Es wäre daher wünschenswert, den direkten Kontakt zwischen einer Heizeinrichtung und der zu erwärmenden Folie zu vermeiden. Ein Verfahren, bei dem das Erwärmen der zu verformenden Folie kontaktlos erfolgt, ist aus der DE 199 26 359 A1 bekannt. Die Folie wird mit Hilfe von Infrarotstrahlern auf eine Temperatur im thermo-elastischen Bereich des Thermoplasten erwärmt. Nachteilig darin ist der hohe Energiebedarf der Infrarotstrahler.

Des Weiteren ist aus der DE 10 2008 050 899 A1 eine Vorrichtung zum Befeuchten eines flexiblen Flachmaterials bekannt, bei der eine Dampfaustrittsfläche über Dampfaustritts-öffnungen verfügt. Auf einem an der Dampfaustrittsfläche gebildeten Dampf-Druckpolster wird das flexible Flachmaterial zur Befeuchtung vorbeigeführt.

Aufgabe der vorliegenden Erfindung ist es, ein Verfahren und eine Heizeinrichtung zur Verfügung zu stellen, die ein berührungsloses Heizen einer tiefziehbaren Folie verbessert.

Diese Aufgabe wird gelöst durch ein Verfahren mit den Merkmalen des Anspruchs 1 bzw. mit den Merkmalen einer Heizeinrichtung nach Anspruch 8. Vorteilhafte Ausführungsformen sind in den Unteransprüchen angegeben.

Bei dem erfindungsgemäßen Verfahren wird eine tiefziehbare Folie vor ihrer Verformung mittels einer Heizung berührungslos aufgeheizt. Die Heizung umfasst dabei wenigstens eine der Folie zugewandte poröse Oberfläche, die von Luft durchströmt wird, wobei durch die Durchströmung der porösen Oberfläche ein Luftfilm zwischen der porösen Oberfläche und der Folie gebildet wird. Dass die Folie dadurch auf dem Luftfilm liegt und kein direkter Kontakt zur Heizung besteht, verhindert eine Trübung der Folie, die der Kontakt mit der Heizung bewirken würde, und erlaubt die Herstellung von hochtransparenten Verpackungen, die aus der erhitzten Folie geformt werden. Weiter wird durch dieses Verfahren, das im Gegensatz zu den Strahlungs- oder Kontaktheizungen des Standes der Technik mit konvektiver Wärmeübertragung arbeitet, jeglicher Verschleiß der porösen Oberfläche vermieden, der sich bei einer Kontaktheizung ergeben würde.

Die Erfindung ermöglicht durch die Umströmung entlang einer flächigen Seite der Folie das gleichmäßige Heizen der Folie. Somit kann eine gleichmäßige Temperaturverteilung innerhalb der Folie erreicht werden.

Die Heizleistung kann durch eine oder mehrere Heizungen zusätzlich erhöht werden. In einer vorteilhaften Variante der Erfindung kann ein zweiter Luftfilm auf der dem ersten Luftfilm gegenüberliegenden Seite der Folie durch eine zweite Heizung erzeugt werden, so dass die Folie zwischen zwei Luftfilmen angeordnet ist. Weiter kann das Heizen auf verschiedene Arbeitstakte verteilt und somit der Arbeitsprozess freier gestaltet werden. So ist es möglich, dass eine erste Heizung die Folie zunächst auf eine Temperatur unterhalb des thermo-elastischen Bereichs erwärmt und eine oder mehrere nachfolgende Heizungen die zum Tiefziehen erforderliche Temperatur in die Folie einbringen.

Durch das Aufbringen einer Kraft kann die Folie auf dem Luftfilm fixiert werden, so dass sich die Folie in einer geeigneten Position auf dem Luftfilm befindet bzw. in dieser Position gehalten wird.

Eine vorteilhafte Variante der Erfindung sieht vor, dass die zum Fixieren der Folie notwendige Kraft mittels Druckluft auf der dem Luftfilm gegenüber liegenden Seite aufgebracht wird. Dadurch wird ein Werkzeugkontakt mit der Folie vermieden.

Die erfindungsgemäße Heizeinrichtung weist eine Heizung mit wenigstens einer porösen Oberfläche auf. Die Heizeinrichtung ist geeignet für die oben beschriebenen vorteilhaften Varianten des Verfahrens.

Vorteilhaft ist es daher, wenn die Heizung dazu ausgebildet ist, Luft durch die poröse Oberfläche zu leiten. In einer besonders vorteilhaften Ausführungsform der Erfindung ist die Luft mittels Luftkanälen durch die poröse Oberfläche leitbar. Dies ermöglicht das gezielte Führen der durchgeleiteten Luft.

Besonders zweckmäßig ist es, wenn die Heizung relativ zur Folie in eine Richtung senkrecht zur Folie bewegbar ist. Dies ermöglicht, den Abstand zwischen Folie und Heizung nach den jeweiligen Erfordernissen einzustellen.

Weiter kann es vorteilhaft sein, wenn in der Heizeinrichtung zwei oder mehr Heizungen vorgesehen sind, da dadurch die Heizleistung entsprechend erhöht wird.

Sind mehrere Heizungen in der Heizeinrichtung vorgesehen, kann es besonders vorteilhaft sein, wenn eine erste Heizung auf einer ersten flächigen Seite der Folie und eine zweite Heizung auf einer zweiten flächigen Seite der Folie angeordnet ist. Die Folie befindet sich dann zwischen den beiden Heizungen und kann gleichmäßig und schnell erhitzt werden.

Besonders vorteilhaft ist es, wenn eine Heizung der Heizeinrichtung fest und eine andere Heizung bewegbar im Bezug zur Folie angeordnet ist. Dadurch kann der Abstand zwischen der Heizeinrichtung und der Folie flexibel gesteuert werden.

Eine Variante der erfindungsgemäßen Heizeinrichtung sieht vor, dass die Heizeinrichtung ein Gehäuse umfasst. Besonders vorteilhaft ist es dabei, wenn das Gehäuse dazu ausgebildet ist, Druckunterschiede im Bezug zu einem die Heizeinrichtung umgebenden Raum zu erzeugen.

Vorteilhaft ist es, wenn die Heizeinrichtung einen Stempel zum Tiefziehen der Folie umfasst. Mit dem Stempel kann das Tiefziehen besonders effizient gestaltet und günstige Produkteigenschaften erreicht werden. In einer Variante sieht die Erfindung vor, dass an dem Stempel wenigstens eine poröse Oberfläche ausgebildet ist. Besonders zweckmäßig ist es dabei, wenn der Stempel ferner dazu ausgebildet ist, Luft durch die poröse Oberfläche des Stempels zu leiten. Dies begünstigt einen zwischen Stempel und Folie gebildeten Luftfilm, der einen direkten Kontakt zwischen Stempel und Folie während des Tiefziehens effektiv vermeidet. Ein Haftenbleiben der Folie an dem Stempel und ein Abdruck desselben an der Folie werden unterbunden. Die Folie gleitet während des Tiefziehens an dem heißen Luftfilm des Stempels, so dass die Folie nach allen Seiten frei ausgedehnt werden kann. Mit einer solchen Anordnung können auch komplizierte Teile mit gleichmäßiger Wanddicke gefertigt werden.

Weiter kann es vorteilhaft sein, wenn die poröse Oberfläche aus einem geeigneten Werkstoff gefertigt ist. Geeignete Werkstoffe können Sinter-, Guss-, Schaum- oder natürliche Stoffe wie Steine mit einer ausreichenden Porosität sein. Als besonders zweckmäßig haben sich poröse Werkstoffe mit mikroporösen Strukturen erwiesen. Als besonders geeignet erwiesen sich Porengrößen von 0,5 bis 15 µm, bevorzugt von 1 bis 6 µm, da sich diese Porengrößen besonders gut für das Hindurchleiten von Luft eignet. Auch wäre es denkbar, dass nur ein Teil der Poren eine derartige Größe aufweisen. Für eine gute Luftdurchlässigkeit sollten mindestens 50 % der Poren im oben genannten Größenbereich, besser jedoch 70 % oder optimalerweise alle Poren in dem Größenbereich liegen.

In einer besonders vorteilhaften Ausführungsform der Erfindung ist die poröse Oberfläche der Heizeinrichtung partiell, das heißt teil- oder stellenweise, an der Heizeinrichtung ausgebildet. An den Stellen ohne poröse Oberfläche bildet sich kein heißer Luftfilm, um die Folie zu erhitzen, wodurch diese Stellen nicht aktiv beheizt werden. Somit ergeben sich entlang der Heizplatte unterschiedliche Temperaturzonen, die zur Beeinflussung vom Formergebnis vorteilhaft ausgenutzt werden können.

Die erfindungsgemäße Formstation ist geeignet für die oben beschriebenen Varianten des Verfahrens sowie zur Aufnahme der oben beschriebenen Heizeinrichtung.

Die erfindungsgemäße Verpackungsmaschine ist geeignet zur Aufnahme der oben beschriebenen Formstation und/oder einer oben beschriebenen Heizeinrichtung.

Ausführungsbeispiele der Erfindung sind in den Zeichnungen dargestellt und werden im Folgenden näher beschrieben. Im Einzelnen zeigen:
- Figur 1: eine schematische Seitenansicht einer erfindungsgemäßen Verpackungsmaschine, und
- Figur 2: eine auszugsweise, schematisch dargestellte Seitenansicht einer Ausführungsvariante einer erfindungsgemäßen Verpackungsmaschine.

Gleiche Komponenten werden in den Figuren durchgängig mit gleichen Bezugszeichen versehen.

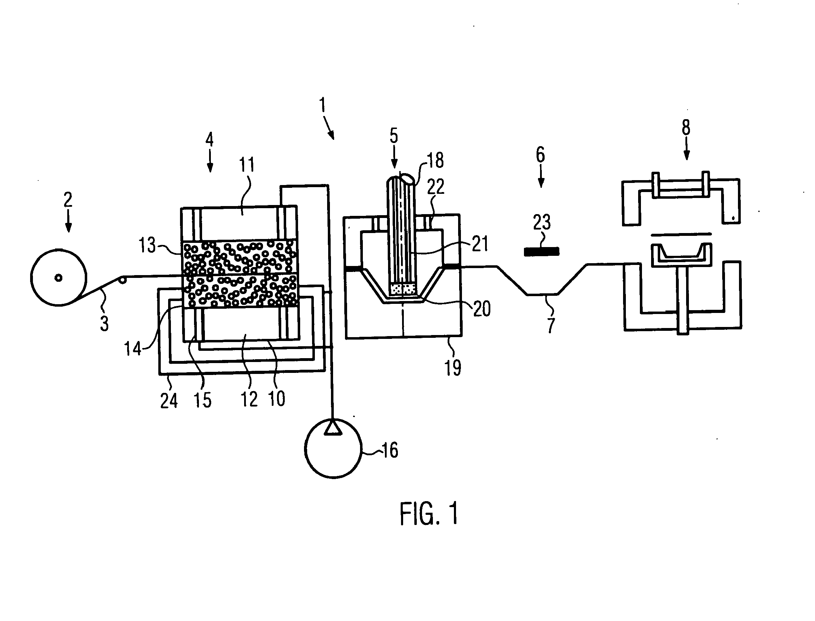

Figur 1 zeigt eine schematisch dargestellte erfindungsgemäße Verpackungsmaschine 1 in der Seitenansicht. Die Verpackungsmaschine 1 verfügt über eine Zuführvorrichtung 2, von der eine Folie 3 abgerollt werden kann, eine Heizeinrichtung 4 zum Erwärmen der Folie 3, eine Formstation 5 zum Tiefziehen der Folie 3, eine Füllstation 6 zum Befüllen einer Verpackung 7 sowie eine Verschließstation 8 zum Evakuieren, Begasen und/oder Siegeln und Verschließen einer in der Formstation 5 tiefgezogenen Verpackung 7.

Die Heizeinrichtung 4 verfügt über eine Heizung 9, die so angeordnet ist, dass die Folie 3 unterhalb hindurchgefördert werden kann, und über eine Heizung 10, die unterhalb der Folie 3 angeordnet ist. Die beiden Heizungen 9, 10 weisen jeweils eine Heizplatte 11, 12 auf, die jeweils auf geeignete Weise, beispielsweise durch elektrische Heizdrähte, erhitzt werden. An jeweils der der Folie 3 zugewandten Seite verfügen die Heizplatten 11, 12 über eine poröse Oberfläche 13, 14, die beispielsweise aus einem porösen Sinterwerkstoff gefertigt ist. Idealerweise ist die Porengröße der porösen Oberfläche 13, 14 im Bereich zwischen 1 µm und 6 µm und gewährleistet eine gute Luftdurchlässigkeit. Die porösen Oberflächen 13, 14 können dabei einstückig zusammen mit den Heizplatten 11, 12 ausgebildet oder aber als separate Einsätze an den Heizplatten 11, 12, beispielsweise durch Schraubverbindungen, befestigt sein. Darüber hinaus weisen die Heizungen 9, 10 eine oder mehrere Luftleitungen 15 auf, die sich von einem Kompressor 16, der innerhalb oder außerhalb der Verpackungsmaschine angeordnet sein kann, durch die Heizplatten 11, 12 bis zu den porösen Oberflächen 13, 14 erstrecken.

Die Formstation 5 umfasst ein Tiefzieh-Werkzeug 17 mit einem Stempel 18 und einer Matrize 19. Der Stempel 18 weist eine poröse Oberfläche 19 an seinem der tiefzuziehenden Folie 3 zugewandten Ende auf, wobei die poröse Oberfläche 20 einstückig mit dem Stempel 18 ausgebildet oder mit demselben beispielsweise mittels einer Schraubverbindung verbunden ist. Der Stempel 18 umfasst weiter eine oder mehrere Luftleitungen 21, die sich von einem innerhalb oder außerhalb der Verpackungsmaschine 1 angebrachten Kompressor bis zu der porösen Oberfläche 20 des Stempels 18 erstrecken. Idealerweise sind die Luftleitungen 21 des Stempels 18 auch mit der Heizeinrichtung 4 verbunden, so dass die der porösen Oberfläche 20 des Stempels 18 zugeführte Luft erhitzt werden kann, oder der Stempel 18 verfügt seinerseits über z.B. elektrische Heizelemente, um die ihn durchströmende Luft zu erhitzen.

Das generell mit der oben beschriebenen Verpackungsmaschine durchführbare Verfahren wird im Folgenden kurz beschrieben.

Die durch die Luftleitungen 15 geleitete Luft durchströmt die porösen Oberflächen 13, 14 derart, dass sich ein Luftfilm entlang der porösen Oberflächen 13, 14 ausbildet. Während des Durchströmens der porösen Oberflächen 13, 14 wird die Luft durch die von den Heizplatten 11, 12 abgegebene Wärme erhitzt, so dass der zwischen dem porösen Oberflächen 13, 14 und der Folie 3 gebildete Luftfilm eine Temperatur aufweist, die weitgehend der Temperatur der Heizplatten 11, 12 entspricht. Je nach Strömungsgeschwindigkeit der durchgeführten Luft muss die Temperatur der Heizplatten 11, 12 eingestellt werden. Je höher die Strömungsgeschwindigkeit der Luft ist, desto höher ist die erfoderliche Temperatur der Heizplatten 11, 12. Wie weiter in Figur 1 dargestellt, können die Luftleitungen 15 so durch die Heizplatten 11, 12 geführt werden, dass sich die durch die Luftleitungen 15 geführte Luft bereits vor dem Durchströmen der porösen Flächen 13, 14, innerhalb der erhitzten Luftleitungen 15, erhitzt.

Alternativ wäre es denkbar, dass die Luft für das Durchströmen der porösen Oberflächen 13, 14 in einem geschlossenen System 24, wie in Figur 1 angedeutet, zirkuliert. Eine solche Anordnung bewirkt, dass sich die Luft durch diese Zirkulation nicht signifikant abkühlt und die Heizleistung der Heizplatten 11, 12 deutlich reduziert werden kann. Dies äußert sich im reduzierten Energiebedarf für die Heizeinrichtung 4.

Die Folie 3 kann durch eine Kraft, die sich durch eine gegen die Heizplatte 11 gerichtete Bewegung der Heizplatte 12 ergibt, zwischen den beiden Luftfilmen an den porösen Oberflächen 13, 14 gehalten werden, so dass die Folie 3 während des Heizvorgangs berührungslos zwischen den beiden Heizplatten 13, 14 fixiert wird. Die Folie 3 wird in Folge der Umströmung von dem heißen Luftfilm, der sich an den porösen Oberflächen 13, 14 ergibt, auf eine Temperatur erhitzt, die in etwa der Temperatur der Heizplatten 11, 12 entspricht und so gewählt wird, dass ein Tiefziehen im folgenden Arbeitsprozess ermöglicht wird.

Auch die poröse Oberfläche 20 des in Fig. 1 gezeigten Stempels 18 wird von der durch die Luftleitungen 21 geleiteten Luft durchströmt und bildet in Folge der Durchströmung einen Luftfilm entlang der porösen Oberfläche 20 aus. Während des Tiefziehvorgangs vermeidet dieser heiße Luftfilm einen direkten Kontakt zwischen der erhitzten Folie 3 und der porösen Oberfläche 20 des Stempels 18 und damit ein zu schnelles Abkühlen der Folie. In Folge des Tiefziehens wird die Luft zwischen der Folie 3 und dem Stempel 18 komprimiert. Diese Kompression der Luft ist energieaufwendig, weshalb es vorteilhaft sein könnte, wenn der Luftfilm, das heißt die Luftzufuhr zum Stempel 18, für das Tiefziehen kurzfristig abgestellt wird.

Der Stempel 19 streckt zunächst die Folie 3 mechanisch in Richtung der Matrize 19 vor. Ein Ausformen einer Verpackung 7 erfolgt anschließend mittels eines Vakuums an der Matrize 19. Die Verpackung 7 dient beispielsweise dem Verpacken eines Produktes 23, das der Füllstation 6 zugeführt wird. Bei dem Produkt 23 kann es sich beispielsweise um Lebensmittel oder andere Erzeugnisse handeln. Die das Produkt 23 enthaltende Verpackung 7 wird in der Verschließstation 8 versiegelt.

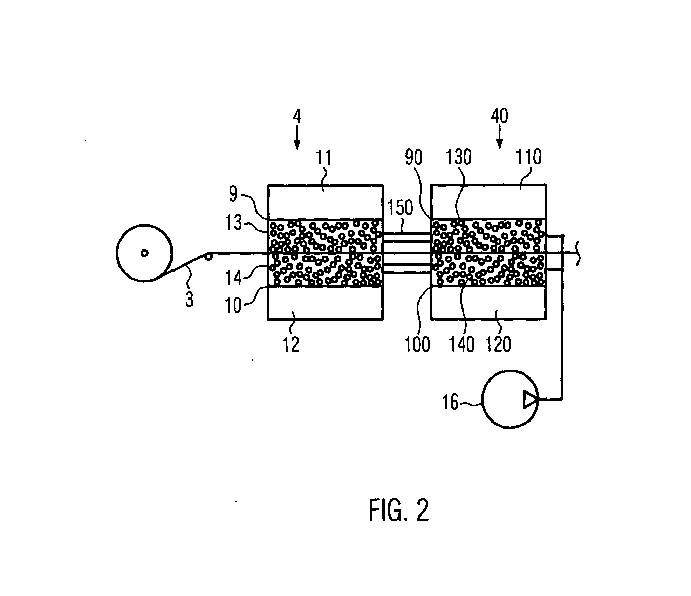

Figur 2 zeigt eine weitere, schematisch und nur auszugsweise dargestellte Ausführungsvariante der Verpackungsmaschine 1. Zusätzlich zu den Heizungen 9, 10 sind in der Heizeinrichtung 4 zwei weitere, nachfolgende Heizungen 90, 100 vorgesehen, die wie die Heizungen 9, 10 über jeweils eine Heizplatte 110, 120 sowie über jeweils eine mit den Heizplatten 110, 120 verbundene poröse Oberflächen 130, 140 verfügt. Der Kompressor 16 leitet Luft in die porösen Oberflächen 130, 140 in die Heizungen 90, 100 in einer Strömungsrichtung parallel zur Folie 3 ein, wodurch sich in Folge der Durchströmung entlang der porösen Oberflächen 130, 140 jeweils ein Luftfilm zwischen den porösen Oberflächen 130, 140 und den flächigen Oberflächen der Folie 3 ausbildet. Durch den Kontakt der porösen Oberflächen 130, 140 mit den Heizplatten 110, 120 erhitzt sich die durchströmende Luft, so dass der gebildete Luftfilm eine Temperatur ähnlich oder gleich der Temperatur der Heizplatten 110, 120 aufweist. Die Heizungen 90, 100 sind durch Luftleitungen 150 mit den Heizungen 9, 10 verbunden, so dass der heiße Luftfilm nach dem Durchströmen der porösen Oberflächen 130, 140 weiter zu den Heizungen 9, 10 geleitet wird, die porösen Oberflächen 13, 14 der Heizungen 9, 10 durchströmt und auch dort die Folie 3 aufheizt. Sind die Heizplatten 11, 12 der Heizungen 9, 10 aktiv, wird der heiße Luftfilm, der sich in Folge der Strömung und Wärmeabgabe an die Folie 3 abgekühlt, erneut durch die Heizplatten 11, 12 erhitzt, so dass die Folie 3 in den beiden Heizeinrichtungen 4, 40 mit etwa der gleichen Temperaturdifferenz aufgeheizt wird. Darüber hinaus könnte die Heizeinrichtung 4 aber auch noch weitere Heizungen zusätzlich aufweisen.

Denkbar wäre aber auch, dass nur die Heizungen 90, 100 über aktive Heizplatten 110, 120 verfügt und die heiße Luft in den Heizungen 9, 10 nicht erneut aufgeheizt wird, sondern nur die Restwärme aus den Heizungen 90, 100 ausgenutzt wird. Damit kann die Folie 3 langsamer, das heißt mit einem geringeren Temperaturanstiegsgradienten, auf die für das Tiefziehen notwendige Temperatur erhitzt werden.

Die Heizungen 9, 10 oder 90, 100 müssen nicht unbedingt paarweise angeordnet sein. Je nach Anwendungsfall wäre es auch denkbar, dass jeweils nur eine flächige Seite der Folie 3 aufgeheizt wird. Auch eine Kombination von doppelseitigem flächigen und einseitigem flächigen Heizen der Folie 3 wäre möglich.

Weiter wäre es denkbar, dass die in Figur 1 dargestellte Zirkulation der Luft durch das System 24 mit der Heizungs-Anordnung aus Figur 2 kombiniert wird. Mit einer solchen, nicht dargestellten Anordnung, wäre eine Zirkulation zwischen mehreren aufeinanderfolgenden Heizungen möglich.

Eine weitere Ausführungsvariante der Erfindung sieht vor, dass die Heizungen 9, 10 eine weitere poröse Oberfläche aufweisen, die genau auf der der porösen Oberfläche 13 gegenüberliegenden Seite der Heizung 9 angeordnet ist. Somit wäre es möglich, dass jeweils ober- und unterhalb der Heizung 9 eine Folie erwärmt wird.

## Patentansprüche

1. Verfahren zum berührungslosen Heizen einer tiefziehbaren Folie (3) vor ihrer Verformung, **dadurch gekennzeichnet, dass** das berührungslose Heizen durch wenigstens eine Heizung (9) mit wenigstens einer der Folie (3) zugewandten porösen Oberfläche (13), die von Luft durchströmt wird, durchgeführt wird, wobei durch die Durchströmung der porösen Oberfläche (13) ein Luftfilm zwischen der porösen Oberfläche (13) und der Folie (3) gebildet wird.

2. Verfahren nach Anspruch 1, **dadurch gekennzeichnet, dass** durch den Luftfilm ferner ein direkter Kontakt der Folie (3) mit der Heizung (9) verhindert wird.

3. Verfahren nach Anspruch 1 oder 2, **dadurch gekennzeichnet, dass** die Luft während der Durchströmung der porösen Oberfläche (13) von der Heizung (9) durch Wärmeübertragung aufgeheizt wird und in Folge des Aufheizens ein heißer Luftfilm zwischen der porösen Oberfläche (13) und der Folie (3) gebildet wird.

4. Verfahren nach einem der vorhergehenden Ansprüche, **dadurch gekennzeichnet, dass** die Folie (3) entlang wenigstens einer flächigen Seite ihrer Oberfläche von dem Luftfilm umströmt wird.

5. Verfahren nach einem der vorhergehenden Ansprüche, **dadurch gekennzeichnet, dass** für das berührungslose Heizen der Folie (3) zwei oder mehr Heizungen (9, 10) bereitgestellt werden, wobei das Heizen der Folie (3) in einem oder mehreren Arbeitstakten durchgeführt wird.

6. Verfahren nach einem der vorhergehenden Ansprüche, **dadurch gekennzeichnet, dass** durch eine zweite Heizung (10) auf der dem Luftfilm gegenüberliegenden flächigen Seite der Folie (3) ein weiterer Luftfilm gebildet wird und die Folie (3) zwischen den beiden Luftfilmen angeordnet wird.

7. Verfahren nach einem der vorhergehenden Ansprüche, **dadurch gekennzeichnet, dass** die Folie (3) mittels einer auf die Folie (3) aufgebrachten Kraft auf dem Luftfilm fixiert wird.

8. Heizeinrichtung (4) zum berührungslosen Heizen einer tiefziehbaren Folie (3), **gekennzeichnet durch** eine Heizung (9) mit wenigstens einer der Folie (3) zugewandten porösen Oberfläche (13).

9. Heizeinrichtung (4) nach Anspruch 8, **dadurch gekennzeichnet, dass** die Heizung (9) dazu ausgebildet ist, Luft durch die poröse Oberfläche (13) zu leiten.

10. Heizeinrichtung (4) nach einem der Ansprüche 8 oder 9, **dadurch gekennzeichnet, dass** die Luft mittels Luftkanälen (15) durch die poröse Oberfläche (13) leitbar ist.

11. Heizeinrichtung (4) nach einem der Ansprüche 8 bis 10, **dadurch gekennzeichnet, dass** die Heizung (9) relativ zur Folie in einer Richtung senkrecht zur Folie (3) bewegbar ist.

12. Heizeinrichtung (4) nach einem der Ansprüche 8 bis 11, **dadurch gekennzeichnet, dass** zwei oder mehr Heizungen (9, 10) vorgesehen sind.

13. Heizeinrichtung (4) nach einem der Ansprüche 8 bis 12, **dadurch gekennzeichnet, dass** die Heizeinrichtung ferner einen Stempel (18) zum Tiefziehen der Folie (3) umfasst, wobei an dem Stempel (18) die wenigstens eine der Folie (3) zugewandte poröse Oberfläche (20) ausgebildet ist.

14. Heizeinrichtung (4) nach einem der Ansprüche 8 bis 13, **dadurch gekennzeichnet, dass** die poröse Oberfläche (20) eine Porengröße im Bereich von 0,5 µm bis 15 µm aufweist.

15. Formstation (5) mit einer Heizeinrichtung (4) nach einem der Ansprüche 8 bis 14.

16. Verpackungsmaschine (1) mit einer Formstation (5) nach Anspruch 15 oder mit einer Heizeinrichtung (4) nach einem der Ansprüche 8 bis 14.
